# EUROPEAN PATENT SPECIFICATION

(11) **EP 4 015 309 B1**
(45) Date of publication and mention of the grant of the patent: **14.02.2024**
(21) Application number: 20216010.7
(22) Date of filing: 21.12.2020
(51) Int. Cl.: B60P 7/15

(54) **CARGO BAR**
FRACHTSICHERUNGSSTANGE
BARRE DE RETENUE

(43) Date of publication of application: 22.06.2022
(73) Proprietor: Axel Johnson International AB, 113 46 Stockholm (SE)
(72) Inventor: Andersson, Ragnvald, 467 94 GRÄSTORP (SE)
(74) Representative: Lind Edlund Kenamets Intellectual Property AB

(56) References cited:
- WO-A1-01/36228
- WO-A1-99/61277
- WO-A1-2018/117951
- DE-A1- 3 901 412
- US-A- 2 890 856

## Description

### Technical Field

The present disclosure relates to a cargo bar for securing cargo in a cargo space.

### Background

Cargo bars or cargo supports are commonly used to secure cargo arranged in a cargo space, for instance of a vehicle, such as in a box truck or a trailer, in containers, or the like. Cargo bars are secured in place by creating a tension between two opposing surfaces, such as opposing wall or the floor and the ceiling of the cargo space.

Existing solutions include cargo bars designed to interact with an attachment system integrated in the surfaces, such as rails or pin holes. This limits the number of vehicles in which the cargo bars can be used, since not all vehicles are equipped with such a system. It also limits the possibilities in configurating the cargo space according to the needs of a specific cargo.

Other solutions rely solely on tension and friction to secure the cargo bar, providing greatly improved freedom of placement of the cargo bar in the cargo space. However, their installation can require considerable force to produce the necessary tension. Some existing solutions such as the cargo support disclosed in WO 99/61277, allow the cargo bar to be locked in a contracted position for installation and be released to expand in a desired location by operating means adapted to lock and unlock the sections of the cargo support. The cargo support of WO 99/61277 is contracted by pressing, by foot, on a separate foldable handle.

A similar solution is disclosed in EP 1 356 171, where a handle is used to contract the cargo bar. A drawback with such a handle is that it may protrude from the cargo bar, thus presenting a risk of damage both to the mechanism itself and to the cargo. For this reason, the handle in EP 1 356 171 is removably fitted to the cargo bar. This requires a user to store the handle in an appropriate place when the cargo bar is in use. WO 2018/117951 A1 discloses a cargo bar according to the preamble of claim 1.

### Summary of the invention

In light of the above there is a need for an improved cargo bar providing easy and safe handling. It is an object of the present disclosure to provide such a cargo bar and to alleviate at least some of the above-mentioned drawbacks.

The invention is defined by the appended independent claim with embodiments set forth by the appended dependent claims, the drawings, and the following description.

According to an aspect of the inventive concept, there is provided a cargo bar intended to be fitted between a floor and a ceiling of a cargo space, the cargo bar comprising a first ceiling having a ceiling contacting portion, a second section having a floor contacting portion, the second section being telescopically displaceable with respect to said first section between a contracted position and an expanded position such that, when the cargo bar is arranged in a cargo space having a height corresponding to the height of the cargo bar, and the second section is brought into its expanded, said ceiling contacting portion is brought into contact with the ceiling. An expansion biasing element connected to said first and second sections is adapted to bias said second section toward said expanded position. The cargo bar further comprises locking means including a locking pin displaceable in a direction transverse to a longitudinal extension of the cargo bar, said locking means having a locked position, in which the locking pin extends through respective openings of the first and second sections so as to lock said second section in said contracted position, and an open position, in which a displacement of said second section with respect to said first section is allowed. A maneuvering mechanism including a rotatable lever is arranged to longitudinally displace said second section toward said contracted position, when said lever is rotated in a first direction. The maneuvering mechanism further comprises an actuating member connected to the lever, wherein the rotating lever is arranged to longitudinally displace the actuating member along the longitudinal extension of the cargo bar when said lever is rotated in a second direction opposite said first direction. Said actuating member is further adapted to interact, when said lever is rotated in a second direction opposite said first direction, with an abutment surface of the locking means to bring the locking means from the locked position to the open position, thereby releasing the second section and bringing the second section into its expanded position by action of the expansion biasing element.

Maneuvering a cargo bar according to the invention is simplified since all displacements, i.e. both the contraction of the cargo bar and the opening of the locking means to expand the cargo bar, are controlled by the lever. In particular, an operator needs not directly manipulate the locking pin to bring the locking means to the open position.

Preferably, the actuating member is displaceable along the longitudinal extension of the cargo bar inside the second section. The actuating member is thus protected on the inside of the cargo bar. This minimizes risks of damage and injury.

In some embodiments, the maneuvering mechanism further comprises a maneuvering biasing element arranged to produce a biasing force between the first section and the actuating member, so as to assist the maneuvering mechanism in displacing the second section from the expanded position to the contracted position, when rotating the lever in said first direction. Such a maneuvering biasing element can thus produce a biasing force between the first and the second section, via the actuating member, to partially counteract the expansion biasing element. The force required in operating the lever to bring the cargo bar into the contracted position is thereby reduced.

The maneuvering biasing element may be longitudinally arranged in a hollow portion of the actuating member. An elongated portion of the actuating member may project past said maneuvering biasing element toward said locking means to interact with said abutment surface. This provides flexibility in the placement of the locking means.

According to the invention, the actuating member comprises a wedge adapted to interact with said abutment surface to convert a longitudinal displacement of the actuating member to a transversal displacement of the locking pin. Such a configuration allows for a high level of control of the displacement of the locking pin. The angle of the wedge can be adapted to a desired speed of displacement in relation to the rotation of the lever. Additionally, thanks to the mechanical advantage given by the wedge, the locking pin is displaced by the wedge with minimal effort.

The maneuvering mechanism may be configured such that when the cargo bar is in said expanded position, the lever is flush with a surface of the first section. This ensures that the cargo bar has substantially flat surfaces along its longitudinal extension, allowing the cargo bar to be placed in close proximity to cargo without risking damage to the cargo with any protruding elements, or to the maneuvering mechanism itself.

In some embodiments, at least one of the ceiling contacting portion or the floor contacting portion is telescopically displaceable in the first or second section respectively, so as to enable a length of the cargo bar to be adapted to a height of the cargo space in which the cargo bar is to be fitted. This allows the cargo bar to be used in cargo spaces of varying dimensions.

In some embodiments, the maneuvering mechanism further comprises a link, wherein said link is rotatably connected at a first end, about a first axis, to said first section and rotatably connected at a second end opposite the first end, about a second axis, to a medial portion of said lever; said lever is rotatably connected at a first end, about a third axis, to said actuating member through slots in said second section, said slots allowing the second section to be displaceable with respect the rotatable connection between said lever and said actuating member; the first, second, and third axes are parallel; and the second axis is located, when the cargo bar is in said expanded position, on an inward side, relative the cargo bar, of a plane defined by the first and third axes, such that said maneuvering biasing element biases the lever toward a back side of the cargo bar, thereby securing the lever in place.

Such a configuration allows the lever to be secured in place when the cargo bar is in the expanded position without biasing the lever to rotate in any direction when the cargo bar is in any other position than the expanded position. This provides improved safety since it minimizes the risk of clamping injury by the lever.

Preferably, the expansion biasing element is a gas spring. This can provide easy assembling of the cargo bar. Alternatively, the expansion biasing element may comprise one or more coil springs. This may provide weight savings.

The maneuvering biasing element may be a coil spring.

### Brief description of the drawings

The invention will be described in more detail in the following by means of one embodiment and with reference to the accompanying drawings, in which
- Figs. 1a-c: show side views of a cargo bar according to an embodiment of the invention;
- Figs. 2a-c: show sections of the maneuvering mechanism in positions corresponding to Figs. 1a-c;
- Figs. 3a-b: show perspective views of some elements of the cargo bar in positions corresponding to Figs. 1a-b and 2a-b, respectively.

### Detailed Description of the Figures

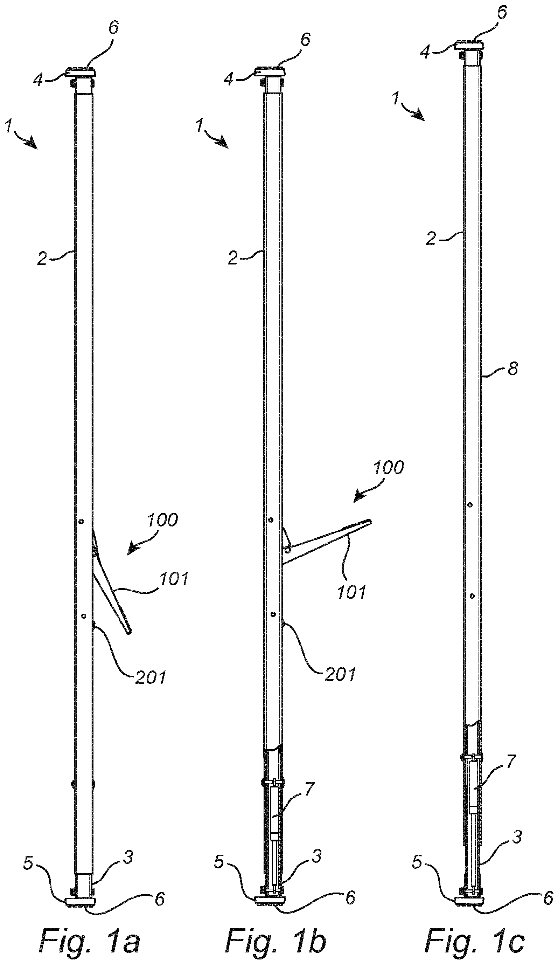

The cargo bar 1 in Figs. 1a-c generally includes a first 2 and a second 3 section which are telescopically displaceable with respect to one another between a contracted position, shown in Figs. 1a and 1b, and an expanded position, shown in Fig. 1c. Here, the second section is displaceable in the first section. The cargo bar 1 has a rectangular cross-section, although alternative shapes are conceivable.

A ceiling contacting portion 4 and a floor contacting portion 5 are arranged at the respective free ends of the first and second sections. The ceiling 4 and floor 5 contacting portions typically have a rectangular contact surface 6, the surface area of which is greater than the cross-section of the cargo bar. The contact surfaces 6 are rubber padded, providing increased friction for securing the cargo bar between a floor and a ceiling. Additionally, the ceiling contacting portion 4 is telescopically displaceable in the first section 2 and can be set to project from the first section 2 at different distances, allowing the total length of the cargo bar 1 to be adjusted according to the height of the cargo space in which it is to be installed. For example, the first section 2 can have several openings distributed along its longitudinal extension (not shown in Figs. 1a-c), the position of the ceiling contacting portion 4 being set by choosing an appropriate opening to interact with a locking pin of the ceiling contacting portion 4.

A biasing element 7 in the form of a gas spring is connected between the first 2 and second 3 sections and arranged to produce a biasing force toward the expanded position.

A displacement of the second section 3 with respect to the first section 2 is controlled by a maneuvering mechanism 100 comprising a rotatable lever 101. The lever 101 is arranged to be rotatable in a plane parallel to the longitudinal extension of the cargo bar 1. The angular range of the lever is shown in Figs. 1a-1c. Fig. 1a shows one extreme position, in which the cargo bar has been brought to the contracted position. Fig. 1b shows an intermediate position, in which the lever has been partially rotated upward. Fig. 1c shows the other extreme position, in which the cargo bar 1 has been brought to the extended position. Here, the lever is flush with a front surface 8 of the first section and is thus not visible in the side view of Fig. 1c.

The cargo bar 1 of Fig. 1a is locked in the contracted position by locking means 200 comprising a locking pin 201 that extends through respective corresponding openings 202, 203 in the first 2 and second 3 sections. Any displacement of the second section 3 in the first section 2 is thus prevented. In Fig. 1b, the lever 101 has been rotated upward. However, the cargo bar 1 is still locked in the contracted position and the locking pin 201 can be seen protruding from the first section 2 in the same way as in Fig. 1a. Naturally, in the expanded position shown in Fig. 1c, the locking means 200 is in an unlocked position. The respective openings 202, 203 in the first 2 and second 3 sections are not aligned, and the locking pin 201 is constrained in the second section 3, thus not visible in Fig. 1c.

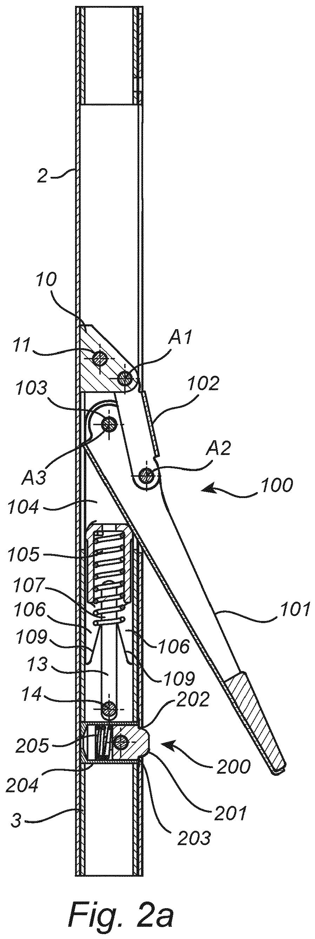

The maneuvering mechanism 100 and the locking means 200 are shown in greater detail in Figs. 2a-c, which are sections of a portion of the cargo bar 1 corresponding to the positions of Figs. 1a-c, respectively.

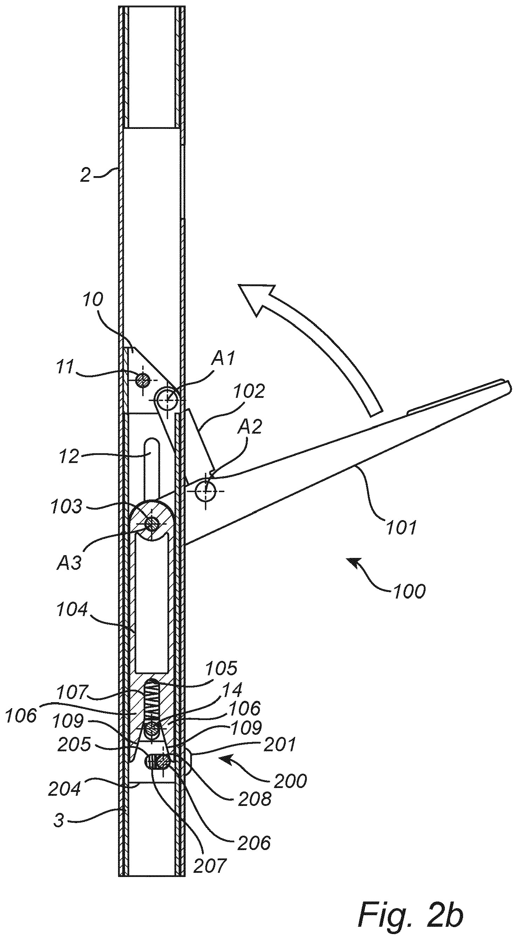

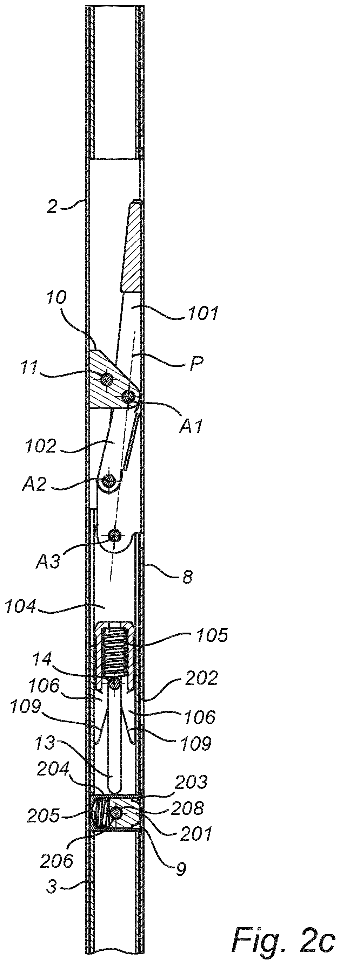

The locking means 200 comprises a spring-loaded locking pin 201 housed in a cylinder 204, extending in a direction transversal to the longitudinal extension of the cargo bar 1 in the second section 3. The spring 205 is arranged to bias the locking pin 201 laterally outward from the center of the cargo bar 1. Figs. 2a and 2b show how the locking pin 201 extends through the respective openings 202, 203 of the first 2 and second 3 sections, when said openings 202, 203 are aligned. In this locked position of the locking means 200, the second section 3 is fixed with respect to the first section 2. In contrast, Fig. 2c shows the locking means 200 in the open position, in which the openings 202, 203 are not aligned. The locking pin 201, biased outward by the spring 204, abuts an inner surface 9 of the first section 1. In this position, a displacement of the second section 3 with respect to the first section 2 is allowed. During such a displacement, the locking pin 201 glides on the inner surface 9 of the first section 1.

The locking means 200 further comprises a guide 206 extending through slots 207 in the cylinder 204, in a direction transversal to the longitudinal extension of the cargo bar 1 and transversal to the extension of the cylinder 204. The guide 206 is fixedly connected to the locking pin 201.

An anchor element 10 is fixedly attached on the inside of the first section 2 by an anchoring pin 11 extending transversally in the first section 2, at a distance from the opening 202. A link 102 is rotatably connected, at one end, about a first axis A1, to the anchoring element 10. The link 102 is rotatably connected, at the other end, about a second axis A2, to the rotatable lever 101. The rotatable lever 101 is further rotatably connected by a connecting rod 103, at one end, about a third axis A3, to an actuating member 104, through a first pair of slots 12 in the second section 3, shown in Fig. 2b. The three axes A1, A2 and A3 are parallel to each other and transversal to the longitudinal extension of the cargo bar 1. The slots 12 are arranged such that the third axis A3 is displaceable along the longitudinal extension of the cargo bar 1. The actuating member 104 is thus displaceable in this direction, in the second section 3, by action of the lever 101.

The second section 3 further has a second pair of slots 13, shown in Figs. 2a and 2c, between the first pair of slots 12 and the locking means 200. A support pin 14 extends transversally through the second pair of slots 13 and is fixedly attached to the first section 2, adjacent to the opening 202, on the same side thereof as the anchoring pin 11. The relative position of the support pin 14 with respect to the second pair of slots 13 depends on the position of the second section 3 with respect to the first section 2. In the contracted position shown in Figs. 2a and 2b, the support pin 14 is at one extremity of the slots 13. In the extended position shown in Fig. 2c, the support pin 14 is at the other extremity of the slots 13.

The actuating member 104 generally has a cross section corresponding to the cross section of the second section 3, facilitating a straight displacement therein. The actuating member 104 further has a hollow portion, in which a maneuvering biasing element 105 in the form of a coil spring is longitudinally arranged. The maneuvering spring 105 is attached to the actuating member 104 at one end, the other end being free. The end portion of the actuating member 104 comprises four elongated portions or prongs 106 surrounding and projecting past the maneuvering spring 105 toward the locking means. Between each pair of prongs 106 on the lateral sides of the actuating member 104, seen in Figs. 2a-c, is a slot 107 arranged to accommodate the support pin 14. Between each pair of prongs 106 on the front and back sides, a slot 108 is arranged to accommodate the cylinder 204 of the locking means 200. Each prong 106 has a wedge-shaped end 109. The wedges 109 on the two front side prongs 106 are arranged to interact with an abutment surface 208 of the guide 206.

In the position of the maneuvering mechanism 100 shown in Fig. 2a, the maneuvering spring 105 is in a relaxed state. In Fig. 2b, the lever 101 has been partly rotated upward, displacing the actuating member 104 downward and bringing the maneuvering spring 105 in contact with the support pin 14, creating a biasing force therebetween. In the position of Fig. 2c, with the lever 101 completely rotated upward, the actuating member 104 is in its most extended position relative to the first section 2, and the maneuvering spring 105 is shown contracted between the actuating member 104 and the support pin 14.

The first axis A1 is fixed. The third axis A3 is moveable longitudinally, and the second axis A2 is free to move both longitudinally and transversally. This creates an articulation in which the second axis A2 is located on an outward side, relative the cargo bar, of a plane P defined by the axes A1 and A3 in most positions of the maneuvering mechanism 100, such as shown in Figs. 2a and 2b. In the extended position of the cargo bar 1 in Fig. 2c, however, the axis A3 is located on an inward side of plane P. Here, the biasing force created by the contraction of the spring 105 between the support pin 14 and the actuating member 104 pushes axis A3 upward. Thanks to the relative position of the three axes, the articulation is biased to bend inward in the cargo bar 1, and the lever 101 is secured in its position.

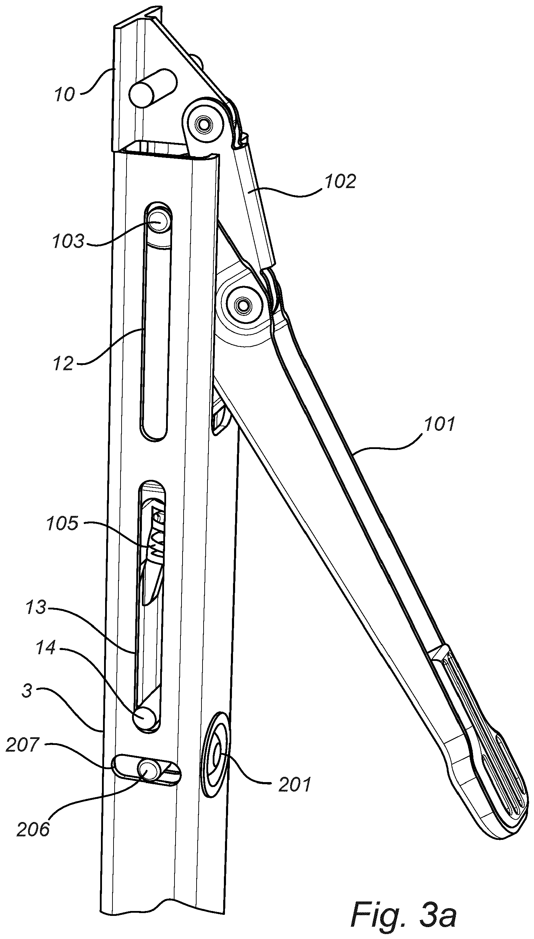

Fig. 3a shows a perspective view of the anchor element 10, the maneuvering mechanism 100, locking means 200 and part of the second section 3. Here, the cargo bar 1 is locked in the contracted position, corresponding to the views shown in Figs. 1a and 2a. In particular, the slots 12, 13 in the second section, and the positions of the connecting rod 103 and of the support pin 14 within these slots 12, 13 are clearly seen.

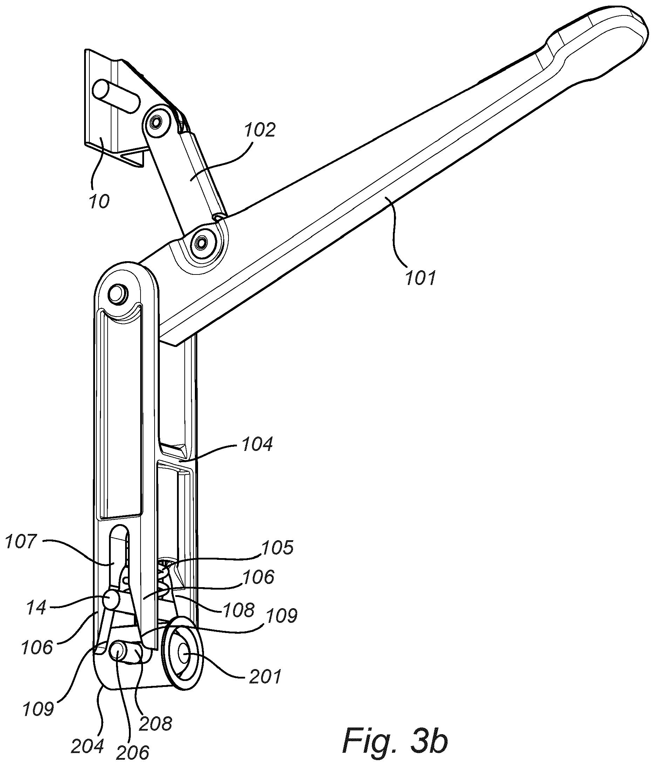

Fig. 3b shows a perspective view of the anchor element 10, the maneuvering mechanism 100, locking means 200, and support pin 14, corresponding to the position of Figs. 1b and 2b. It clearly shows the maneuvering spring 105 surrounded by the prongs 106, the slots 107, 108 accommodating the support pin 14 and the cylinder 204, respectively, and how the wedges 109 are brought into contact with the abutment surface 208 of the guide 206.

In use, the cargo bar 1 is placed in a desired position in a cargo space by an operator, while the cargo bar 1 is in the contracted position of Fig. 1a. For a particular height of the cargo space, the height of the cargo bar can be adjusted by choosing an appropriate extension of the ceiling contacting portion 4 with respect to the first section 2, such that the cargo bar 1 is slightly shorter than the cargo space, while in the contracted position. Once this height has been set, this operation needs not be repeated until the cargo bar 1 is to be installed in a cargo space of a different height.

Once placed vertically with the floor contacting portion 5 at the desired location on the floor of the cargo space, the cargo bar 1 is held in place with one hand, while the lever 101 is rotated upward by the other hand. When the lever 101 is rotated from the position shown in Figs. 1a and 2a to the position shown in Figs. 1b and 2b, the actuating member 104 is displaced downward. The maneuvering spring 105 is brought into contact with the support pin 14 and the wedges 109 are brought into contact with the guide 206. As the lever 101 is rotated further upward, the guide 206 is displaced transversally by action of the wedges 109, thereby displacing the locking pin 201 inward toward the center of the cargo bar 1 and bringing the locking means 200 from the locked position to the open position. As soon as the locking pin 201 no longer extends through the opening 202 of the first section, the first section 2 is pushed upward by the gas spring 7, bringing the cargo bar 1 to the expanded position. The lever 101 is then rotated all the way up, bringing it flush with the front surface 8 of the first section 2. The cargo bar 1 is secured in place between the floor and the ceiling of the cargo space thanks to the biasing force produced by the gas spring 7. The lever 101 is held in place by the contraction of the maneuvering spring 105 between the support pin 14 and the actuating member104. In this position, axis A3 and the support pin 14 are located at the upper edges of the slots 12, 13, respectively.

To remove the cargo bar 1 from the cargo space, the lever 101 is rotated downward from the position seen in Figs. 1c and 2c. The rotation of the lever 101 causes axis A3 to be brought closer to axis A1. During this movement, the connecting 103 rod of axis A3 abuts the end of the slot 12, thereby causing a relative displacement of the second section 3 in the first section 2 and bringing the cargo bar 1 toward the contracted position. The force required by the operator in this movement to contract the gas spring 7 is reduced thanks to the coil spring 105. Indeed, the coil spring 105 is initially contracted between the support pin 14 and the actuating member 104, and thus indirectly the second section 3. During the downward rotation of the lever 101, the coil spring 105 expands, thus assisting the displacement of the second section 3, partly counteracting the biasing force of the gas spring 7. As the lever 101 is further rotated downward, the openings 202, 203 are finally brought into alignment and the locking pin 201 is pushed out by the spring 205, thereby locking the cargo bar 1 in the contracted position of Figs. 1a and 2a. The cargo bar 1 can now be safely removed from its position in the cargo space.

The person skilled in the art realizes that the present invention by no means is limited by the embodiments described above. The features of the described embodiments may be combined in different ways, and many modifications and variations are possible within the scope of the appended claims. In the claims, any reference signs placed in parentheses shall not be construed as limiting the claim. The word "comprising" does not exclude the presence of other elements than those listed in the claim. The word "a" or "an" preceding an element does not exclude the presence of a plurality of such elements.

## Claims

1. A cargo bar (1) intended to be fitted between a floor and a ceiling of a cargo space, the cargo bar (1) comprising:
a first section (2) having a ceiling contacting portion (4),
a second section (3) having a floor contacting portion (5), the second section (3) being telescopically displaceable with respect to said first section (2) between a contracted position and an expanded position such that, when the cargo bar (1) is arranged in a cargo space having a height corresponding to the height of the cargo bar (1), and the second section (3) is brought into its expanded position, said ceiling contacting portion (4) is brought into contact with the ceiling,
an expansion biasing element (7) connected to said first (2) and second (3) sections and adapted to bias said second section (3) toward said expanded position,
locking means (200) including a locking pin (201) displaceable in a direction transverse to a longitudinal extension of the cargo bar (1), said locking means (200) having a locked position, in which the locking pin (201) extends through respective openings (202, 203) of the first (2) and second (3) sections so as to lock said second section (3) in said contracted position, and an open position, in which a displacement of said second section (3) with respect to said first section (2) is allowed, and
a maneuvering mechanism (100) including a rotatable lever (101) arranged to longitudinally displace said second section (3) toward said contracted position, when said lever (101) is rotated in a first direction,
**characterized in that**
the maneuvering mechanism (100) further comprises an actuating member (104) connected to the lever (101), wherein the rotating lever (101) is arranged to longitudinally displace the actuating member (104) along the longitudinal extension of the cargo bar (1),
wherein said actuating member (104) is adapted to interact, when said lever (101) is rotated in a second direction opposite said first direction, with an abutment surface (208) of the locking means (200) to bring the locking means (200) from the locked position to the open position, thereby releasing the second section (3) and bringing the second section (3) into its expanded position by action of the expansion biasing element (7), and
wherein the actuating member (104) comprises a wedge (109) adapted to interact with said abutment surface (208) to convert a longitudinal displacement of the actuating member (104) to a transversal displacement of the locking pin (201).

2. The cargo bar (1) according to claim 1, wherein the actuating member (104) is displaceable along the longitudinal extension of the cargo bar (1) inside the second section (3).

3. The cargo bar (1) according to claim 1 or 2, wherein the maneuvering mechanism (100) further comprises a maneuvering biasing element (105) arranged to produce a biasing force between the first section (2) and the actuating member (104), so as to assist the maneuvering mechanism (100) in displacing the second section (3) from the expanded position to the contracted position, when rotating the lever (101) in said first direction.

4. The cargo bar (1) according to claim 3, wherein the maneuvering biasing element (105) is longitudinally arranged in a hollow portion of the actuating member (104), and wherein an elongated portion (106) of the actuating member (104) projects past said maneuvering biasing element (105) toward said locking means (200) to interact with said abutment surface (208).

5. The cargo bar (1) according to any one of the preceding claims, wherein the maneuvering mechanism (100) is configured such that when the cargo bar (1) is in said expanded position, the lever (101) is flush with a surface (8) of the first section (2).

6. The cargo bar (1) according to any one of the preceding claims, wherein at least one of the ceiling contacting portion (4) or the floor contacting portion (5) is telescopically displaceable in the first (2) or second (3) section respectively, so as to enable a length of the cargo bar (1) to be adapted to a height of the cargo space in which the cargo bar (1) is to be fitted.

7. The cargo bar (1) according to any one of the preceding claims, wherein the maneuvering mechanism (100) further comprises a link (102),
said link (102) is rotatably connected at a first end, about a first axis (A1), to said first section (2) and rotatably connected at a second end opposite the first end, about a second axis (A2), to a medial portion of said lever (101),
said lever (101) is rotatably connected at a first end, about a third axis (A3), to said actuating member (104) through slots (12) in said second section (3), said slots (12) allowing the second section (3) to be displaceable with respect the rotatable connection between said lever (101) and said actuating member (104),
the first (A1), second (A2), and third (A3) axes are parallel, and
the second axis (A2) is located, when the cargo bar (1) is in said expanded position, on an inward side, relative the cargo bar (1), of a plane (P) defined by the first (A1) and third (A3) axes, such that said maneuvering biasing element (105) biases the lever (101) toward the center of the cargo bar (1), thereby securing the lever (101) in place.

8. The cargo bar (1) according to any one of the preceding claims, wherein the expansion biasing element (7) is a gas spring.

9. The cargo bar (1) according to any one of claims 3-8, wherein the maneuvering biasing element (105) is a coil spring.

## Patentansprüche

1. Frachtsicherungsstange (1), die dafür vorgesehen ist, zwischen einem Boden und einer Decke eines Frachtraums angebracht zu werden, wobei die Frachtsicherungsstange (1) Folgendes umfasst:
eine erste Sektion (2), die einen Deckenberührungsabschnitt (4) aufweist,
eine zweite Sektion (3), die einen Bodenberührungsabschnitt (5) aufweist, wobei die zweite Sektion (3) in Bezug auf die erste Sektion (2) derart zwischen einer eingezogenen Position und einer ausgefahrenen Position teleskopartig verschiebbar ist, dass, wenn die Frachtsicherungsstange (1) in einem Frachtraum angeordnet ist, der eine Höhe aufweist, die der Höhe der Frachtsicherungsstange (1) entspricht, und die zweite Sektion (3) in ihre ausgefahrene Position gebracht wird, der Deckenberührungsabschnitt (4) in Berührung mit der Decke gebracht wird,
ein Ausdehnungsvorspannelement (7), das mit der ersten (2) und der zweiten (3) Sektion verbunden und angepasst ist, um die zweite Sektion (3) hin zu der ausgefahrenen Position vorzuspannen,
Arretierungsmittel (200), die einen Sicherungsstift (201) einschließen, der in einer Richtung, quer zu einer Längsausdehnung der Frachtsicherungsstange (1), verschiebbar ist, wobei die Arretierungsmittel (200) eine arretierte Position, in der sich der Sicherungsstift (201) durch jeweilige Öffnungen (202, 203) der ersten (2) und der zweiten (3) Sektion erstreckt, um so die zweite Sektion (3) in der eingezogenen Position zu arretieren, und eine offene Position, in der einer Verschiebung der zweiten Sektion (3) in Bezug auf die erste Sektion (2) ermöglicht wird, aufweisen, und
einen Manövriermechanismus (100), der einen drehbaren Hebel (101) einschließt, der dafür angeordnet ist, die zweite Sektion (3) in Längsrichtung hin zu der eingezogenen Position zu verschieben, wenn der Hebel (101) in einer ersten Richtung gedreht wird,
**dadurch gekennzeichnet, dass**
der Manövriermechanismus (100) ferner ein Betätigungselement (104) umfasst, das mit dem Hebel (101) verbunden ist, wobei der sich drehende Hebel (101) dafür angeordnet ist, das Betätigungselement (104) in Längsrichtung entlang der Längsausdehnung der Frachtsicherungsstange (1) zu verschieben,
wobei das Betätigungselement (104) angepasst ist, um, wenn der Hebel (101) in einer zweiten Richtung, entgegengesetzt zu der ersten Richtung, gedreht wird, mit einer Widerlagerfläche (208) der Arretierungsmittel (200) in Wechselwirkung zu treten, um die Arretierungsmittel (200) von der arretierten Position zu der offenen Position zu bringen, wodurch die zweite Sektion (3) freigegeben und die zweite Sektion (3) durch eine Wirkung des Ausdehnungsvorspannelements (7) in ihre ausgefahrene Position gebracht wird, und
das Betätigungselement (104) einen Keil (109) umfasst, der angepasst ist, um mit der Widerlagerfläche (208) in Wechselwirkung zu treten, um eine Längsverschiebung des Betätigungselements (104) in eine Querverschiebung des Sicherungsstifts (201) umzuwandeln.

2. Frachtsicherungsstange (1) nach Anspruch 1, wobei das Betätigungselement (104) entlang der Längsausdehnung der Frachtsicherungsstange (1) innerhalb der zweiten Sektion (3) verschiebbar ist.

3. Frachtsicherungsstange (1) nach Anspruch 1 oder 2, wobei der Manövriermechanismus (100) ferner ein Manövriervorspannelement (105) umfasst, das angeordnet ist, um eine Vorspannkraft zwischen der ersten Sektion (2) und dem Betätigungselement (104) zu erzeugen, um so den Manövriermechanismus (100) beim Verschieben der zweiten Sektion (3) von der ausgefahrenen Position zu der eingezogenen Position zu unterstützen, wenn der Hebel (101) in der ersten Richtung gedreht wird.

4. Frachtsicherungsstange (1) nach Anspruch 3, wobei das Manövriervorspannelement (105) in Längsrichtung in einem hohlen Abschnitt des Betätigungselements (104) angeordnet ist und wobei ein länglicher Abschnitt (106) des Betätigungselements (104) über das Manövriervorspannelement (105) hinaus hin zu den Arretierungsmitteln (200) vorspringt, um mit der Widerlagerfläche (208) in Wechselwirkung zu treten.

5. Frachtsicherungsstange (1) nach einem der vorhergehenden Ansprüche, wobei der Manövriermechanismus (100) derart konfiguriert ist, dass, wenn sich die Frachtsicherungsstange (1) in der ausgefahrenen Position befindet, der Hebel (101) mit einer Oberfläche (8) der ersten Sektion (2) bündig ist.

6. Frachtsicherungsstange (1) nach einem der vorhergehenden Ansprüche, wobei mindestens einer von dem Deckenberührungsabschnitt (4) oder dem Bodenberührungsabschnitt (5) jeweils teleskopartig in der ersten (2) beziehungsweise der zweiten (3) Sektion verschiebbar ist, um so zu ermöglichen, dass eine Länge der Frachtsicherungsstange (1) an eine Höhe des Frachtraums, in dem die Frachtsicherungsstange (1) angebracht werden soll, angepasst wird.

7. Frachtsicherungsstange (1) nach einem der vorhergehenden Ansprüche, wobei der Manövriermechanismus (100) ferner ein Verbindungsglied (102) umfasst,
wobei das Verbindungsglied (102) an einem ersten Ende, um eine erste Achse (A1), drehbar mit der ersten Sektion (2) verbunden ist und an einem zweiten Ende, entgegengesetzt zu dem ersten Ende, um eine zweite Achse (A2), drehbar mit einem mittleren Abschnitt des Hebels (101) verbunden ist,
wobei der Hebel (101) an einem ersten Ende, um eine dritte Achse (A3), drehbar mit dem Betätigungselement (104) verbunden ist, durch Schlitze (12) in der zweiten Sektion (3), wobei die Schlitze (12) ermöglichen, dass die zweite Sektion (3) in Bezug auf die drehbare Verbindung zwischen dem Hebel (101) und dem Betätigungselement (104) verschiebbar ist,
wobei die erste (A1), die zweite (A2) und die dritte (A3) Achse parallel sind und
wobei sich die zweite Achse (A2), wenn sich die Frachtsicherungsstange (1) in der ausgefahrenen Position befindet, auf einer inneren Seite, im Verhältnis zu der Frachtsicherungsstange (1), einer Ebene (P), die durch die erste (A1) und die dritte (A3) Achse definiert wird, befindet, so dass das Manövriervorspannelement (105) den Hebel (101) hin zu der Mitte der Frachtsicherungsstange (1) vorspannt, wodurch der Hebel (101) an seinem Platz gesichert wird.

8. Frachtsicherungsstange (1) nach einem der vorhergehenden Ansprüche, wobei das Ausdehnungsvorspannelement (7) eine Gasfeder ist.

9. Frachtsicherungsstange (1) nach einem der Ansprüche 3 bis 8, wobei das Manövriervorspannelement (105) eine Schraubenfeder ist.

## Revendications

1. Barre de retenue (1) destinée à être ajustée entre un plancher et un plafond d'un espace de cargaison, la barre de retenue (1) comprenant :
une première section (2) dotée d'une section en contact avec le plafond (4),
une seconde section (3) ayant une section en contact avec le plancher (5), la seconde section (3) étant déplaçable de manière télescopique par rapport à ladite première section (2) entre une position contractée et une position étendue de sorte que, lorsque la barre de retenue (1) est disposée dans un espace de cargaison ayant une hauteur correspondant à la hauteur de la barre de retenue (1), et que la seconde section (3) est amenée dans sa position étendue, ladite section de contact avec le plafond (4) est amenée en contact avec le plafond,
un élément d'inclinaison d'expansion (7) connecté auxdites première (2) et seconde (3) sections et apte à incliner ladite seconde section (3) vers ladite position étendue,
un moyen de verrouillage (200) incluant une broche de verrouillage (201) déplaçable dans un sens transversal à une extension longitudinale de la barre de retenue (1), ledit moyen de verrouillage (200) ayant une position verrouillée dans laquelle la broche de verrouillage (201) s'étend à travers des orifices respectifs (202,203) des première (2) et seconde (3) sections de manière à verrouiller ladite seconde section (3) dans ladite position contractée, et une position ouverte dans laquelle un déplacement de ladite seconde section (3) par rapport à ladite première section (2) est permis, et
un mécanisme de manoeuvre (100) incluant un levier rotatif (101) conçu pour déplacer longitudinalement ladite seconde section (3) vers ladite position contractée lorsque ledit levier (101) est tourné dans un premier sens,
**caractérisé en ce que**
le mécanisme de manoeuvre (100) comprend en outre un élément d'actionnement (104) connecté au levier (101), le levier rotatif (101) étant conçu pour déplacer longitudinalement l'élément d'actionnement (104) dans l'extension longitudinale de la barre de retenue (1),
ledit élément d'actionnement (104) étant apte à interagir, lorsque ledit levier (101) est tourné dans un second sens opposé audit premier sens, avec une surface de butée (208) du moyen de verrouillage (200) pour amener le moyen de verrouillage (200) de la position verrouillée à la position ouverte, en relâchant ainsi la seconde section (3) et en amenant la seconde section (3) dans sa position étendue par action de l'élément d'inclinaison d'expansion (7), et
l'élément d'actionnement (104) comprenant un coin (109) apte à interagir avec ladite surface de butée (208) pour convertir un déplacement longitudinal de l'élément d'actionnement (104) en un déplacement transversal de la broche de verrouillage (201).

2. Barre de retenue (1) selon la revendication 1, dans laquelle l'élément d'actionnement (104) est déplaçable dans l'extension longitudinale de la barre de retenue (1) à l'intérieur de la seconde section (3).

3. Barre de retenue (1) selon la revendication 1 ou 2, dans laquelle le mécanisme de manoeuvre (100) comprend en outre un élément d'inclinaison de manoeuvre (105) conçue pour produire une force d'inclinaison entre la première section (2) et l'élément d'actionnement (104) de manière à assister le mécanisme de manoeuvre (100) dans le passage de la seconde section (3) de la position étendue à la position contractée lors de la rotation du levier (101) dans ledit premier sens.

4. Barre de retenue (1) selon la revendication 3, dans laquelle l'élément d'inclinaison de manoeuvre (105) est disposé longitudinalement dans une section creuse de l'élément d'actionnement (104), et une section allongée (106) de l'élément d'actionnement (104) est en saillie après ledit élément d'inclinaison de manoeuvre (105) vers ledit élément de verrouillage (200) afin d'interagir avec ladite surface de butée (208).

5. Barre de retenue (1) selon l'une quelconque des revendications précédentes, dans laquelle le mécanisme de manoeuvre (100) est configuré de manière à ce que, lorsque la barre de retenue (1) est dans ladite position étendue, le levier (101) soit à ras d'une surface (8) de la première section (2).

6. Barre de retenue (1) selon l'une quelconque des revendications précédentes, dans laquelle au moins l'une parmi la section de contact avec le plafond (4) ou la section de contact avec le plancher (5) est déplaçable de manière télescopique dans la première (2) ou seconde (3) section respectivement de manière à permettre à une longueur de la barre de retenue (1) de s'adapter à une hauteur de l'espace de cargaison dans lequel la barre de retenue (1) doit être ajustée.

7. Barre de retenue (1) selon l'une quelconque des revendications précédentes, dans laquelle le mécanisme de manoeuvre (100) comprend en outre un lien (102),
ledit lien (102) étant connecté en rotation par une première extrémité, autour d'un premier axe (A1), à ladite première section (2) et connecté en rotation par une seconde extrémité opposée à ladite première section (2), autour d'un deuxième axe (A2), à une section médiane dudit levier (101),
ledit levier (101) étant connecté en rotation par une première extrémité, autour d'un troisième axe (A3), audit élément d'actionnement (101) par des fentes (12) de ladite seconde section (3), lesdites fentes (12) permettant à la seconde section (3) d'être déplaçable par rapport à la connexion rotative entre ledit levier (101) et ledit élément d'actionnement (104),
les premier (A1), deuxième (A2), et troisième (A3) axes étant parallèles, et
le deuxième axe (A2) se trouvant, lorsque la barre de retenue (1) est dans ladite position étendue, sur une face tournée vers l'intérieur par rapport à la barre de retenue (1) d'un plan (P) défini par les premier (A1) et troisième (A3) axes, de sorte que ledit élément d'inclinaison de manoeuvre (105) incline le levier (101) vers le centre de la barre de retenue (1), en bloquant ainsi le levier (101) en place.

8. Barre de retenue (1) selon l'une quelconque des revendications précédentes, dans laquelle l'élément d'inclinaison d'expansion (7) est un ressort à gaz.

9. Barre de retenue (1) selon l'une quelconque des revendications 3 à 8, dans laquelle l'élément d'inclinaison de manoeuvre (105) est un ressort hélicoïdal.
